# FASCICULE DE BREVET EUROPEEN

(11) **EP 3 843 965 B1**
(45) Date de publication et mention de la délivrance du brevet: **28.09.2022**
(21) Numéro de dépôt: 19756415.6
(22) Date de dépôt: 27.08.2019
(51) Int. Cl.: B29B 11/16, B29C 70/22, D04H 3/10

(54) **PROCÉDÉ DE FABRICATION D'UNE PRÉFORME COMPOSITE POUR LA FABRICATION D'UN PANNEAU COMPOSITE À GÉOMÉTRIE À DOUBLE COURBURE**
VERFAHREN ZUR HERSTELLUNG EINES ZUSAMMENGESETZTEN VORFORMLINGS ZUR HERSTELLUNG EINER VERBUNDPLATTE MIT DOPPELTER KRÜMMUNGSGEOMETRIE
METHOD FOR PRODUCING A COMPOSITE PREFORM FOR PRODUCING A COMPOSITE PANEL WITH DOUBLE CURVATURE GEOMETRY

(30) Priorité: 27.08.2018 FR 1857693
(43) Date de publication de la demande: 07.07.2021
(73) Titulaire: Safran Nacelles, 76700 Gonfreville-l'Orcher (FR)
(72) Inventeur: DESJOYEAUX, Bertrand, 77550 Moissy Cramayel (FR); LORRILLARD, Julien, 77550 Moissy Cramayel (FR); PROVOST, Benjamin, 77550 Moissy Cramayel (FR)
(74) Mandataire: Germain Maureau
(86) Numéro de dépôt international: PCT/EP2019/072893
(87) Numéro de publication internationale: WO 2020/043746

(56) Documents cités:
- EP-A1- 2 546 049
- EP-A1- 3 168 353
- FR-A1- 2 995 557
- FR-A1- 3 000 969
- LONG A C ET AL: "CHARACTERIZING THE PROCESSING AND PERFORMANCE OF ALIGNED REINFORCEMENTS DURING PREFORM MANUFACTURE", COMPOSITES, IPC BUSINESS PRESS LTD. HAYWARDS HEATH, GB, vol. 27A, no. 4, 1 avril 1996 (1996-04-01) , pages 247-253, XP000587322, ISSN: 0010-4361

## Description

La présente invention concerne un procédé de fabrication d'une préforme pour la fabrication d'une pièce de forme finale non développable en matériau composite, réalisée à partir de textile non tissé (« Non Crimp Fabric » ou « NCF » en terminologie anglaise) au moins tri-axial, et une préforme ainsi obtenue.

L'invention concerne également une pièce, telle qu'un panneau, en matériau composite de type de forme finale non développable fabriquée grâce à une préforme obtenue par le procédé selon l'invention, et une nacelle comportant une telle pièce.

La forme non développable peut également être appelée géométrie à double courbure.

Les textiles non tissés sont largement connus et présentent la particularité d'avoir dans un seul pli, des couches de fibres dans plusieurs directions. En d'autres termes, les textiles non tissés sont des préformes fibreuses composées par l'assemblage de plusieurs couches de fibres présentant chacune une orientation différente et maintenues entre elles par des fils de couture. Les textiles non tissés bi-axiaux comportent deux couches dont chacune comporte des fibres orientées dans une direction différente, et donc deux orientations de fibres différentes, tandis que les textiles non tissés tri-axiaux comportent trois couches dont chacune comporte des fibres orientées dans une direction différente, et donc trois orientations de fibres différentes, les textiles non tissés quadri-axiaux quatre couches et donc quatre orientations de fibres, etc.

Habituellement, les pièces de forme finale non développables en matériau composite sont réalisées à partir d'une préforme textile formée d'un textile tissé généralement bi-axial, c'est-à-dire comprenant deux directions de fibres, ou d'un textile non tissé bi-axial, appliquée sur un élément de forme non développable. La préforme textile peut être pré-imprégnée de résine, ou une étape d'imprégnation de résine peut suivre l'étape d'application de la préforme textile sur l'élément de forme non développable. Enfin, la pièce de forme finale non développable en matériau composite est obtenue suite à une étape de polymérisation de la résine. Cette étape de polymérisation peut s'effectuer à froid ou à chaud en fonction de la résine utilisée.

Les textiles tissés et non tissés bi-axiaux sont aptes à se décadrer et peuvent donc être utilisés pour fabriquer des pièces de forme finale non développable sans engendrer de plissure ou cassure des fibres.

Cependant, un textile bi-axial ne comporte que deux orientations de fibres et offre donc des propriétés principales orthotropes, c'est-à-dire selon deux directions perpendiculaire de fibres, qui ne permettent pas d'obtenir un matériau composite ayant de bonnes propriétés de raideur et une bonne tenue mécanique. Il est alors nécessaire d'appliquer de nombreuses épaisseurs de textile, selon différentes orientations de fibres, pour obtenir de bonnes propriétés de raideur et une tenue mécanique élevée.

Une solution connue consiste à fabriquer des pièces de forme finale non développables en matériau composite à partir de textile non tissé tri-axial, également appelé multiaxiaux. La difficulté est d'éviter les cassures de fibres car le textile non tissé tri-axial est non déformable. A cet effet, il est connu du document US 8 234 990 B2**,** de jouer sur la nature, l'espacement, la tension et/ou la densité des coutures du textile non tissé tri-axial.

Cependant, ce type de textile non tissé appliqué sur des éléments de forme non développable, plus particulièrement sur des surfaces de révolution présentant un axe longitudinal, a tendance à générer des ondulations de fibres. De tels éléments pièce présentent une génératrice courbe dont le rayon de courbure évolue le long de l'axe longitudinal.

Il est également connu du document EP 2 456 049, d'utiliser une préforme fibreuse fabriquée à plat puis déformée pour obtenir une préforme fibreuse tridimensionnelle, dans laquelle les fibres sont sous la forme d'un textile comprenant plusieurs couches de fibres selon des orientations différentes, les fibres étant reliées entre elles par des coutures permettant le glissement des fibres les unes par rapport aux autres lors de la déformation.

Il est donc nécessaire de fournir un nouveau procédé d'obtention de pièces en matériau composite de type de forme finale non développable de révolution qui permette l'obtention de pièces ayant une bonne tenue mécanique et ne présentant pas de plissure, cassure ou ondulation.

A cet effet, le procédé de fabrication selon l'invention est un procédé de fabrication d'une préforme pour la fabrication d'une pièce en matériau composite de type de forme finale non développable de révolution ou de quasi-révolution, présentant un axe longitudinal, caractérisé en ce qu'il comporte les étapes suivantes :
a) on fournit un textile non tissé au moins tri-axial comprenant :
   - une première couche comprenant des fibres dites circonférentielles orientées dans une première direction,
   - une deuxième couche comprenant des fibres, orientées dans une deuxième direction,
   - une troisième couche comprenant des fibres, orientées dans une troisième direction, et
   - des coutures liant les fibres des première, deuxième et troisième couches, les coutures s'étendant parallèlement entre elles et formant des fourreaux pour les fibres circonférentielles,
b) on dispose ledit textile sur ou dans un élément de forme non développable, soit identique à la forme finale non développable souhaitée, soit de dimensions réduites par rapport à la forme finale non développable souhaitée, en plaçant les coutures parallèles à la direction circonférentielle de l'élément,
c) on fait glisser les fibres circonférentielles dans les fourreaux formés par les coutures, de sorte que le textile se trouve en contact continu avec l'élément de forme non développable et s'adapte ainsi à la forme non développable de l'élément de forme non développable.

Ainsi, le procédé selon l'invention permet d'obtenir à partir d'une seule épaisseur de textile, une préforme en matériau composite dont les coutures sont de directions parallèles entre elles et forment des fourreaux pour des mèches de fibres, dites circonférentielles, d'une première couche dudit textile.

En une seule épaisseur de textile tri-axial, on produit ainsi une préforme pouvant avoir des propriétés mécaniques quasi-isotropes dans les plans du textile.

On entend par « forme finale de quasi-révolution » une forme finale non développable ne se limitant pas à des pièces à 360°. Cela peut être des parties de pièces de révolution.

En outre, la forme de quasi-révolution comprend un ensemble de génératrices dans des plans parallèles à l'axe longitudinal, dont au moins une génératrice est une courbe d'ordre supérieur ou égal à deux, et dont des courbes contenues dans des plans perpendiculaires à l'axe longitudinal interceptent au moins un point de chaque génératrice.

Préférentiellement, la forme de quasi-révolution présente une forme tonnoïde. Elle peut en outre présenter des singularités locales telles que des légers bossages ou retraits.

Les première, deuxième et troisième couches de fibres constituant le textile peuvent avoir des masses surfaciques différentes, voire même des masses surfaciques variables au sein d'une même couche, par exemple par variation de densité de fibres au sein de ladite couche.

L'élément de forme non développable présente une surface proche d'une surface de révolution et un axe longitudinal.

Les étapes b) et c) permettent de conformer le textile, de sorte à obtenir la préforme.

Plus particulièrement, l'étape c) permet de faire coulisser les fibres circonférentielles dans leurs fourreaux, ce qui entraine un décadrage des fibres des deuxième et troisième couches du textile, qui sont maintenues par les coutures.

Par « décadrage », on entend que les angles des fibres des deuxième et troisième couches, par rapport aux fibres circonférentielles, varient au sein du textile.

Le décadrage est réalisé selon le gradient de courbure de l'élément de forme non développable.

Ainsi, le textile est plaqué contre l'élément de forme non développable.

Cette conformation s'accompagne de déplacements relatifs des fibres des différentes couches du textile. Le textile acquiert alors une forme non développable identique à celle de l'élément de forme non développable sur lequel il est appliqué, de manière à obtenir la préforme.

La forme non développable de la préforme est conservée, on parle de déformation plastique ou durable par opposition à une déformation élastique, grâce au frottement résultant des coutures liant les fibres des différentes couches.

Selon d'autres caractéristiques de l'invention, le procédé de l'invention comporte l'une ou plusieurs des caractéristiques optionnelles suivantes considérées seules ou selon toutes les combinaisons possibles.

Dans une première variante, l'étape c) est réalisée en mettant en tension les fibres circonférentielles, de façon à faire glisser les fibres circonférentielles dans les fourreaux formés par les coutures et à décadrer les fibres des deuxième et troisième couches.

Selon cette variante, les extrémités des fibres des deuxième et troisième couches peuvent aussi être maintenues grâce à des moyens de maintien tels que des pinces ou adhésifs.

De manière avantageuse, selon cette variante, on peut réaliser également une pression sur le textile en direction de l'élément de forme non développable, grâce à un moyen de pression tel qu'un barreau.

Ainsi le moyen de pression permet de maintenir les fibres des deuxième et troisième couches plaquées contre l'élément de forme non développable et de favoriser le glissement des fibres circonférentielles et donc le décadrage des fibres des deuxième et troisième couches.

Dans un mode préféré, le moyen de pression est déplacé tangentiellement à la forme non développable vers une ou des extrémités libres de la préforme.

Lors de l'étape c) on met avantageusement en tension les fibres des deuxième et troisième couches.

Dans une deuxième variante, l'étape c) est réalisée en mettant en tension les fibres des deuxième et troisième couches et en appliquant une pression sur le textile en direction de l'élément de forme non développable, grâce à un moyen de pression tel qu'un barreau, de façon à faire glisser les fibres circonférentielles dans les fourreaux formés par les coutures et à décadrer les fibres des deuxième et troisième couches.

Dans un mode préféré, le moyen de pression est déplacé tangentiellement à la forme non développable vers une ou des extrémités libres de la préforme.

Ces variantes peuvent également être combinées simultanément ou successivement ou alternativement.

La mise en tension est avantageusement effectuée progressivement, en tirant sur les extrémités des fibres circonférentielles et/ou des fibres des deuxième et troisième couches.

La mise en tension est appliquée manuellement ou mécaniquement.

Selon une caractéristique, l'élément de forme non développable est un élément de forme convexe, dit élément de forme mâle.

Selon cette caractéristique, l'étape c) est réalisée en enroulant le textile autour de l'élément de forme mâle.

Selon une autre caractéristique, l'élément de forme non développable est un élément de forme concave, dit élément de forme femelle.

Selon cette caractéristique, l'étape c) est réalisée en appliquant au moins un rouleau sur le textile, le long de la circonférence de l'élément de forme femelle, pour conformer le textile.

Dans un mode de réalisation, l'élément de forme non développable présente une circonférence identique par rapport à la pièce de forme finale non développable souhaitée.

Dans un autre mode de réalisation, l'élément de forme non développable présente une circonférence réduite par rapport à la pièce de forme finale non développable souhaitée.

Par circonférence réduite on entend que la géométrie est réduite par rapport à la forme finale, les rayons de courbure étant réduits d'un même facteur.

Dans le cas de forme finale de quasi-révolution, l'élément de forme non développable peut présenter une forme de révolution d'une circonférence identique ou réduite par rapport à la circonférence de la forme finale non développable.

Selon une caractéristique, lors de l'étape b) on bloque le textile contre l'élément de forme non développable, grâce à un moyen de blocage, le long d'une génératrice de l'élément de forme non développable.

Cette étape de blocage est réalisée soit au niveau d'une zone centrale du textile, soit au niveau d'une extrémité du textile.

Avantageusement, le textile à des masses surfaciques de fibres par couche de fibres, identiques ou différentes.

En outre, le textile à avantageusement des masses surfaciques constantes ou variables au sein d'une même couche de fibres, par variation de densité surfacique des fibres.

De préférence, les fibres des deuxième et troisième couches présentent, lors de l'étape a), des angles par rapport aux fibres circonférentielles respectivement inférieurs à 90° et supérieurs à 90°.

De préférence encore, pour constituer une répartition de fibres équilibrée, les angles de la deuxième couche ont une valeur a, tandis que les angles de la troisième couche ont une valeur de β=180 - a.

De manière avantageuse, les α est compris entre 15° et 80°.

Dans un mode de réalisation préféré, les coutures sont en forme de tricot-chaine.

Les coutures en forme de tricot-chaine comportent, de manière connue, un motif tricot, également appelé zig-zag, sur une première face et un motif en chaine sur la face opposée.

Dans ce mode de réalisation, la première couche comprenant les fibres circonférentielles est disposée soit contre le motif tricot des coutures, soit entre les deuxième et troisième couches.

Selon une caractéristique, le textile comporte en outre au moins une bande de fibres additionnelles dont l'orientation est perpendiculaire aux coutures.

Selon cette caractéristique, le moyen de blocage du textile sur l'élément de forme non développable est préférentiellement disposé sur cette bande de fibres additionnelles.

La présente invention se rapporte également à une préforme obtenue par le procédé tel que décrit précédemment.

Une telle préforme comporte un textile au moins tri-axial comportant une première couche comprenant des fibres circonférentielles orientées dans une première direction, une deuxième couche comprenant des fibres orientées dans une deuxième direction, et une troisième couche comprenant des fibres orientées dans une troisième direction, les fibres des deuxième et troisième couches présentant des angles par rapport aux fibres circonférentielles qui sont variables au sein de la préforme.

L'invention concerne par ailleurs un procédé d'obtention d'une pièce en matériau composite de type de forme finale non développable de révolution ou de quasi-révolution, présentant un axe longitudinal, caractérisé en ce qu'il comporte une étape de fabrication d'une préforme selon le procédé tel que décrit précédemment, et une étape supplémentaire d'application de la préforme sur un module de forme non développable identique à la pièce de forme finale non développable souhaitée et de consolidation par insertion et polymérisation de matrice à chaud ou à froid.

Selon une caractéristique, lors de l'étape supplémentaire, on applique plusieurs préformes sur le module de forme non développable identique à la pièce de forme finale non développable souhaitée.

Selon une autre caractéristique, on peut ajouter d'autres structures textiles localement.

Ces autres structures sont avantageusement ajoutées dans l'empilement des couches textiles.

En variante, au moins une partie de ces autres structures est ajoutée au-dessus des couches textiles.

En variante encore, au moins une partie de ces autres structures est ajoutée au-dessous des couches textiles.

L'invention concerne en outre une pièce en matériau composite de type de forme finale non développable de révolution ou de quasi-révolution, fabriquée grâce à la préforme obtenue par le procédé tel que décrit précédemment.

La pièce en matériau composite de type de forme finale non développable de révolution ou de quasi-révolution, est délimitée par une surface définie par un ensemble de génératrices dans des plans parallèles à l'axe longitudinal, dont au moins une génératrice est une courbe d'ordre supérieur ou égal à deux, et dont des courbes contenues dans des plans perpendiculaires à l'axe longitudinal interceptent au moins un point de chaque génératrice.

Préférentiellement, la pièce en matériau composite présente une forme tonnoïde.

Elle peut en outre présenter des singularités locales telles que des légers bossages ou retraits.

La pièce en matériau composite de type de forme finale non développable de révolution ou de quasi-révolution comporte la préforme obtenue par le procédé tel que décrit précédemment.

La pièce en matériau composite de type de forme finale non développable de révolution ou de quasi-révolution est caractérisée en ce qu'elle comporte un textile dont les coutures forment des fourreaux pour les fibres dites circonférentielles d'une même couche du textile, lesdites coutures étant parallèles à la direction circonférentielle de la pièce.

Cette pièce en matériau composite est remarquable en ce que les fibres ne présentent pas de plissure ou cassure. Elle comporte un textile avec des fibres d'une même couche orientées parallèlement les unes aux autres et parallèlement à la direction circonférentielle de la pièce en matériau composite et des fibres de deux autres couches présentant des angles qui évoluent le long de la direction longitudinale de la pièce en matériau composite.

L'invention concerne également une nacelle comportant une pièce telle que décrite précédemment.

D'autres caractéristiques et avantages de la présente invention apparaitront à la lecture de la description qui va suivre et à l'examen des figures annexées dans lesquelles :
- la figure 1 est une vue schématique en perspective de côté d'une pièce de forme finale non développable de quasi-révolution autour d'un axe longitudinal selon l'invention, comportant un textile non tissé tri-axial ;
- la figure 2 est une vue schématique en coupe illustrant le textile utilisé pour la fabrication de la pièce de la figure 1 ;
- la figure 3 est une vue schématique de dessus du textile de la figure 2;
- la figure 4 est une vue schématique de dessus d'une variante du textile de la figure 3 ;
- les figures 5a, 5b, 6, 7, 8, 9a et 9b illustrent un premier mode de réalisation du procédé de fabrication de la pièce de la figure 1 ;
- la figure 10 est une vue schématique de profil de la pièce de la figure 1, illustrant les angles entre les fibres circonférentielles et les fibres des deuxième et troisième couches ;
- la figure 11 est une vue schématique partielle de la pièce de la figure 1, comportant une bande de fibres additionnelles.

Dans la description qui va suivre et dans les revendications, des composants identiques, similaires ou analogues seront désignés par les mêmes chiffres de référence et on emploiera les termes « avant », « arrière », « horizontal », « vertical », « supérieur », « inférieur », etc. à titre non limitatif et en référence aux dessins afin de faciliter la description.

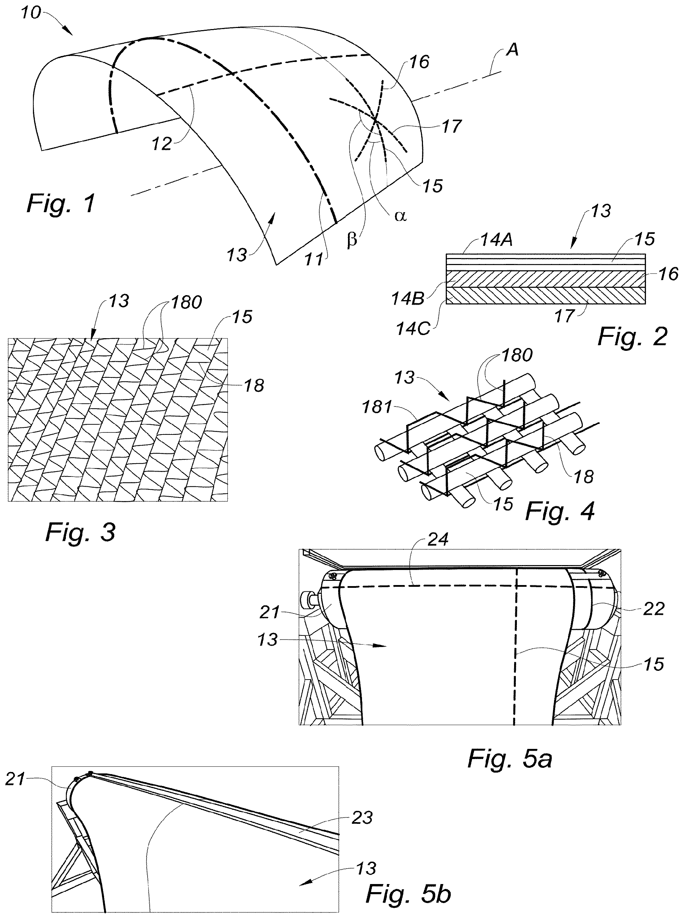

La figure 1 représente une pièce 10 de forme finale non développable de quasi-révolution selon l'invention.

La pièce 10 est un panneau présentant une forme de demi tonneau.

On parle de forme ovoïde ou patatoïde irrégulière.

La pièce 10 présente un axe longitudinal A. Elle présente une direction circonférentielle 11, et une génératrice 12 courbe dont le rayon de courbure évolue le long de l'axe longitudinal A.

La pièce 10 est en matériau composite. Elle comporte un textile non tissé tri-axial 13.

La pièce 10 est drapée d'un textile non tissé tri-axial 13.

En variante, la pièce 10 en matériau composite comporte plusieurs textiles non tissés tri-axiaux 13.

Comme illustré sur la figure 2, le textile non tissé tri-axial 13 utilisé pour la fabrication de la pièce 10, comporte une première couche 14A, une deuxième couche 14B et une troisième couche 14C.

Les première, deuxième et troisième couche 14A, 14B et 14C sont superposées, la première couche 14A étant la couche supérieure, la deuxième couche 14B étant la couche intermédiaire et la troisième couche 14C étant la couche inférieure.

Lesdites couches peuvent être nommées nappes ou nappes unidirectionnelles.

Chaque couche est constituée de fibres disposées parallèlement les unes aux autres.

La première couche 14A comprend des fibres circonférentielles 15 orientées dans une première direction, tandis que la deuxième couche 14B comprend des fibres 16 orientées dans une deuxième direction et la troisième couche 14C comprend des fibres 17 orientées dans une troisième direction.

Les fibres circonférentielles 15 et les fibres 16 et 17 des deuxième et troisième couches, sont disposées superposées selon des plans parallèles entre eux.

Les fibres 16 de la deuxième couche 14B forment un angle α (figure 1) avec les fibres circonférentielles 15 et les fibres 17 de la troisième couche 14C forment un angle β (figure 1) avec les fibres circonférentielles 15.

L'angle β est généralement égale à 180 - α, et de préférence α = 60°, de façon à obtenir un comportement quasi-isotrope dans le plan du textile 13.

La première couche 14A comportant les fibres circonférentielles 15 est préférentiellement une couche supérieure du textile 13.

Les fibres 15, 16 et 17 desdites couches 14A, 14B et 14C sont regroupées par mèches qui sont reliées entre elles par des coutures 18 (figure 3).

Comme le montre la figure 3, les coutures 18 sont en forme de tricot sur une première face du textile non tissé tri-axial 13, tandis qu'elles sont en forme de chaine (non représentée) sur une seconde face (non représentée) du textile non tissé tri-axial 13, la seconde face étant opposée à la première face.

La forme de chaine correspond à des lignes parallèles de points dits de chainette, tandis que la forme de tricot correspond à des segments transversaux 180 reliant deux points de chainette adjacents.

Dans une variante représentée à la figure 4, la forme de tricot correspond à une alternance de segments transversaux 180 et de segments longitudinaux 181.

Les coutures 18 s'étendent parallèlement entre elles et parallèlement aux fibres circonférentielles 15 de la première couche 14A.

La première couche 14A comportant les fibres circonférentielles 15 est positionnée au contact du motif tricot, c'est-à-dire au contact des segments transversaux, des coutures 18.

Ainsi, la première couche 14A comportant les fibres circonférentielles 15 est positionnée entre les segments transversaux des coutures 18 et la deuxième couche 14B, qui est disposée entre la première couche 14A et la troisième couche 14C, qui est elle-même disposée entre la deuxième couche 14B et les points de chainette des coutures 18.

Les segments transversaux 180 des coutures 18 et les fibres 16, 17 des deuxième et troisième couches 14B, 14C, forment alors des fourreaux pour des mèches de fibres circonférentielles 15.

Lesdites mèches de fibres circonférentielles 15 sont gainées par les fourreaux ainsi formés.

Dans une variante non représentée, la première couche 14A comportant les fibres circonférentielles 15 est positionnée entre les deuxième et troisième couches 14B et 14C.

Selon cette variante, les coutures 18 peuvent être en lignes parallèles indépendantes sur les deux faces du textile 13, c'est à dire formées, par exemple, de chainettes droites comprenant sur une face uniquement des segments 181 parallèles aux fibres circonférentielles 15 et des boucles de chainettes sur l'autre face.

Les fibres 16, 17 des deuxième et troisième couches 14B, 14C, forment alors des fourreaux entre deux lignes de couture 18 pour des mèches de fibres circonférentielles 15.

En référence à la figure 1, les fibres circonférentielles 15 sont parallèles à la direction circonférentielle 11 de la pièce 10.

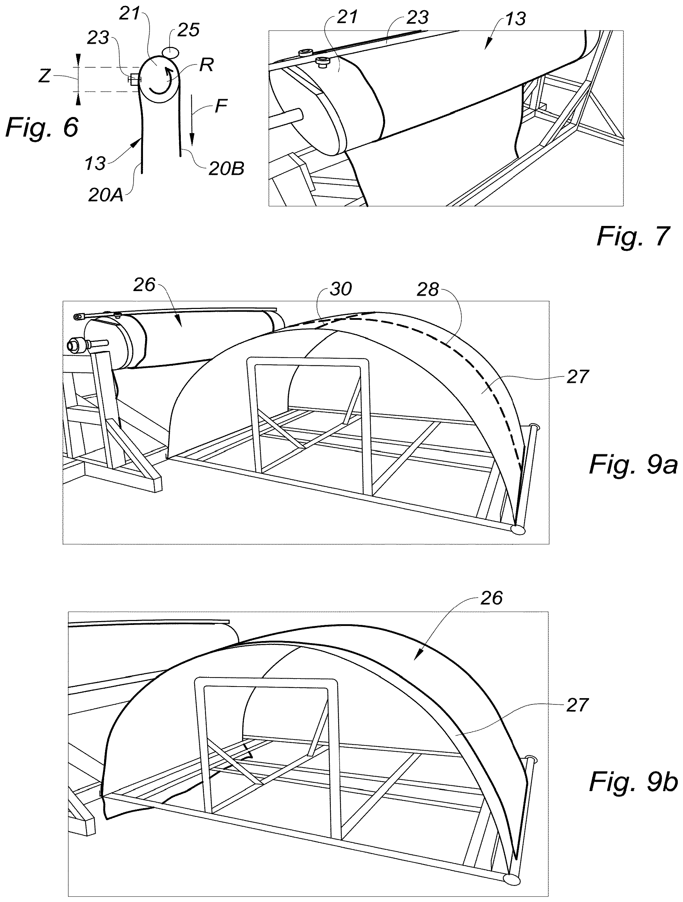

Les figures 5a et 5b illustrent une première étape d'un premier mode de réalisation du procédé d'obtention de la pièce 10, dans laquelle on dispose le textile non tissé tri-axial 13, sous forme de bande présentant deux extrémités opposées 20A et 20B (figure 6), sur un rouleau 21 de forme non développable présentant une surface de révolution de dimensions réduites par rapport à la forme finale non développable souhaitée et présentant une direction circonférentielle 22, en plaçant les fibres circonférentielles 15 parallèles à la direction circonférentielle 22 du rouleau 21.

Cette première étape correspond à l'étape b) telle que présentée précédemment au regard de l'obtention d'une préforme.

Le rouleau 21 de forme non développable présente alors une forme en dôme ou forme mâle.

Ce premier mode de réalisation est appelé formage en dôme.

Le rouleau a une forme tonnoïde.

Le textile non tissé tri-axial 13 est bloqué contre le rouleau 21 grâce à une barre bridée 23 (figure 5b), le long d'une génératrice 24 du rouleau 21 (figure 5a).

Dans l'exemple de la figure 6, la barre bridée 23 bloque le textile non tissé tri-axial 13 au niveau d'une zone centrale Z dudit textile non tissé tri-axial 13.

Ainsi, les extrémités 20A et 20B sont libres.

La figure 6 illustre une deuxième étape du premier mode de réalisation du procédé d'obtention de la pièce 10, dans laquelle on applique une tension dans la direction de la flèche F sur l'extrémité 20B des fibres circonférentielles 15, en faisant pivoter le rouleau 21 le long de la flèche R.

Cette deuxième étape correspond à l'étape c) telle que présentée précédemment au regard de l'obtention d'une préforme.

Cette tension permet de faire glisser les fibres circonférentielles 15 dans leurs fourreaux formés par les coutures 18, de sorte que le textile non tissé tri-axial 13 soit plaqué contre le rouleau 21.

Le textile non tissé tri-axial 13 est alors en contact continu avec le rouleau 21.

Lors du coulissement des fibres circonférentielles 15, les fibres 16 et 17 des deuxième et troisième couches du textile non tissé tri-axial 13, sont décadrées en fonction des périmètres locaux du rouleau 21.

En effet, les fibres 16 et 17 des deuxième et troisième couches sont retenues par les coutures 18.

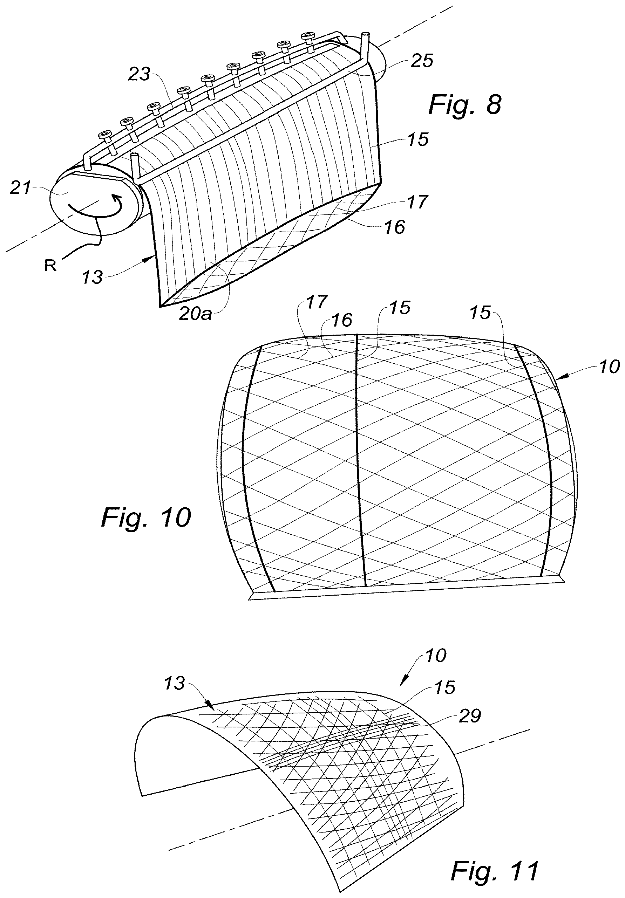

Ainsi, les angles α et β formés entre les fibres 16 et 17 respectivement des deuxième et troisième couches, et les fibres circonférentielles 15, varient au sein du textile non tissé tri-axial 13 (figure 10).

Lors de cette deuxième étape, on peut aussi utiliser un barreau 25 pour réaliser une pression sur le textile non tissé tri-axial 13 en direction du rouleau.

Des moyens de maintien tels que des pinces ou adhésifs (non représentés) permettent de maintenir les extrémités des fibres 16 et 17 des deuxième et troisième couches 14B et 14C.

Ces moyens de maintien permettent également d'appliquer des tensions sur les extrémités de fibres 16 et 17 des deuxième et troisième couches 14B et 14C pour favoriser le plaquage sur la forme du rouleau 21.

La figure 7 illustre le textile non tissé tri-axial 13 ainsi enroulé autour du rouleau 21.

La partie de textile non tissé tri-axial 13 entre la zone centrale Z et l'extrémité 20B du textile non tissé tri-axial 13 ayant été conformée autour du rouleau est bloquée contre le rouleau 21 par application d'un adhésif ou d'une barrette bridée (non représentés) ou tout autre moyen que l'on peut retirer, de façon à maintenir le textile non tissé tri-axial 13 enroulé autour du rouleau 21. L'extrémité 20B est alors bloquée de manière réversible.

Lors de cette deuxième étape, on enroule ensuite la partie de textile non tissé tri-axial 13 entre la zone centrale Z et l'extrémité 20A opposée du textile non tissé tri-axial 13 autour du rouleau 21 par pivotement dudit rouleau 21 dans le sens inverse de la flèche R (figure 6), bien que cela ne soit pas représenté, de façon à conformer le reste du textile non tissé triaxial 13 autour du rouleau 21.

A l'issu de cette deuxième étape, le textile non tissé tri-axial 13 est conformé, comme illustré à la figure 8.

La figure 8 montre que les fibres circonférentielles 15 ont glissé dans les fourreaux par rapport aux fibres 16, 17 des deuxième et troisième couches 14B, 14C après conformage autour du rouleau 21 de forme non développable.

Avant conformage, leurs extrémités auraient été alignées.

Dans un mode de réalisation non représenté, la première couche 14A est déliée localement des deuxième et troisième couches 14B, 14C, au voisinage des extrémités des fibres 15, de sorte à faciliter la préhension des fibres de ces différentes couches, pour l'application de la tension ou leur maintien.

Dans une autre mode de réalisation non représenté, les bords latéraux du textile 13, ne comportent que des fibres 16, 17 des deuxième et troisième couches 14B et 14C, sans fibres circonférentielles 15, de sorte à faciliter la préhension des fibres des deuxième et troisième couches 14B et 14C indépendamment des fibres circonférentielles 15.

On obtient une préforme 26 (figure 9a) de textile non tissé tri-axial 13, dont les angles α et β sont variables au sein du textile non tissé tri-axial 13.

Les figures 9a et 9b illustrent une troisième étape du premier mode de réalisation du procédé d'obtention de la pièce 10, dans laquelle on applique la préforme 26 sur un module 27 identique à la pièce 10 de forme finale non développable souhaitée.

Cette troisième étape correspond à l'étape supplémentaire telle que présentée précédemment au regard de l'obtention d'une pièce en matériau composite de type de forme finale non développable de révolution ou de quasi-révolution.

La préforme 26 est appliquée en disposant les coutures 18 parallèles à la direction circonférentielle 28 du module 27.

Le module 27 présente alors une forme en dôme ou forme mâle.

Lors de cette troisième étape, l'application de la préforme 26 sur le module 27 est nommé drapage en dôme.

En variante, la préforme 26 peut être appliquée dans un module identique à la pièce 10 de forme finale non développable souhaitée.

Le module présente alors une forme en berceau ou forme femelle.

On parle alors de drapage en berceau.

La préforme 26 épouse la forme du module. Elle est en contact continu avec le module.

Cette troisième étape est suivie d'une étape d'imprégnation de résine puis d'une étape de polymérisation, de sorte à obtenir la pièce 10 selon l'invention, telle qu'illustré à la figure 1.

La figure 10 illustre les variations d'angles α et β entre les fibres circonférentielles 15 et les fibres 16 et 17 des deuxième et troisièmes couches.

Les angles α entre les fibres circonférentielles 15 et les fibres 16 de la deuxième couche varient entre -15° et +15° par rapport aux orientations initiales du textile non tissé tri-axial avant conformage. L'évolution d'angle est d'autant plus importante que la double courbure est importante.

Les angles β entre les fibres circonférentielles 15 et les fibres 17 de la troisième couche varient de la même manière que les angles α entre les fibres circonférentielles 15 et les fibres 16 de la deuxième couche.

La figure 11 illustre une variante de pièce 10 comportant un textile non tissé tri-axial 13 comportant une bande de fibres additionnelles 29 dont l'orientation est perpendiculaire aux fibres circonférentielles 15.

Selon cette variante, la barre bridée 23 (figure 6) du textile non tissé tri-axial 13 sur le rouleau 21, est préférentiellement disposée sur cette bande de fibres additionnelles 29, ou à proximité.

La bande de fibres additionnelles 29 est préférentiellement disposée dans une zone à faible décadrage.

Elle a pour effet de bloquer davantage la déformation du textile non tissé tri-axial du fait de la quatrième direction de fibre. Cette bande est préférentiellement étroite par rapport aux dimensions du textile et à la circonférence du rouleau 21.

Dans un deuxième mode de réalisation non illustré du procédé d'obtention de la pièce 10, la première étape consiste à disposer le textile non tissé tri-axial 13, sous forme de bande présentant deux extrémités opposées 20A et 20B (figure 6), directement sur le module 27 (figures 9a, 9b) identique à la pièce 10 de forme finale non développable souhaitée, en plaçant les fibres circonférentielles 15 parallèles à la direction circonférentielle 28 du module 27.

Dans cette première étape, le textile non tissé tri-axial 13 est maintenu plaqué contre le module 27 grâce à une barre bridée (non représentée), le long d'une génératrice 30 du module 27.

La barre bridée bloque le textile non tissé tri-axial 13 au niveau d'une extrémité 20A dudit textile non tissé tri-axial 13.

La deuxième étape consiste alors à appliquer une tension dans la direction opposée à l'extrémité 20A bloquée, sur l'extrémité 20B libre des fibres circonférentielles 15.

En variante, lors de la première étape, la barre bridée bloque le textile non tissé tri-axial 13 au niveau d'une zone centrale du textile non tissé tri-axial 13.

Selon cette variante, la deuxième étape consiste à appliquer une tension au niveau des deux extrémités 20A, 20B des fibres circonférentielles 15.

Cette tension permet de faire glisser les fibres circonférentielles 15 dans leurs fourreaux formés par les coutures 18, de sorte que le textile non tissé tri-axial 13 soit plaqué contre le module 27.

Le textile non tissé tri-axial 13 est alors en contact continu avec le module 27.

La tension est appliquée progressivement aux extrémités des fibres circonférentielles 15, le long de l'axe longitudinal (non représenté) du module.

Lors du coulissement des fibres circonférentielles 15, les fibres 16 et 17 des deuxième et troisième couches du textile non tissé tri-axial 13, sont décadrées en fonction des périmètres locaux sur le module 27.

Ainsi, les angles α et β formés entre les fibres 16 et 17 respectivement des deuxième et troisième couches, et les fibres circonférentielles 15, varient au sein du textile non tissé tri-axial 13 (figure 10).

Lors de cette deuxième étape, un barreau (non représenté) réalise une pression sur le textile non tissé tri-axial 13 en direction du module 27.

Des moyens de maintien (non représentés) tels que des pinces ou adhésifs permettent de maintenir les extrémités des fibres 16 et 17 des deuxième et troisième couches 14B et 14C.

A l'issu de cette deuxième étape, le textile non tissé tri-axial 13 est conformé.

Cette étape est suivie d'une étape d'imprégnation de résine puis d'une étape de polymérisation, de sorte à obtenir la pièce 10 selon l'invention, telle qu'illustré à la figure 1.

Dans un troisième mode de réalisation non représenté, la première étape consiste à disposer le textile non tissé tri-axial 13, sous forme de bande présentant deux extrémités opposées 20A et 20B (figure 6), dans un élément de forme non développable femelle ou en berceau, de préférence identique à la forme finale non développable souhaitée.

En variante, la forme femelle présente une surface de révolution de dimensions réduites par rapport à la forme finale non développable souhaitée.

Selon ce mode de réalisation, le textile non tissé tri-axial 13 est bridé contre l'élément grâce à une barre de bridage, le long d'une génératrice de l'élément.

On applique ensuite une tension sur les fibres circonférentielles 15 en bridant le textile non tissé tri-axial 13 contre l'élément en berceau, tout en appliquant le textile non tissé tri-axial 13 le long de la surface de la forme femelle par des rouleaux presseurs ou éléments pousseurs, ou en déplaçant la barre de bridage le long de la direction circonférentielle de l'élément.

De cette façon on plaque progressivement le textile non tissé tri-axial 13 en contact continu avec la surface de la forme femelle.

Les pièces 10 selon l'invention ne comportent pas uniquement du textile non tissé tri-axial 13. Elles peuvent également comporter d'autres couches de fibres d'autres matériaux, et/ou des textiles tissés ou non tissés bi-axiaux.

Dans des variantes non représentées, le textile non tissé pourrait être un textile non tissé quadri-axial ou plus.

Dans d'autres variantes encore, le textile non tissé pourrait être un textile multicouches tri-axial, c'est-à-dire comportant trois directions de fibres, mais plus de trois couches de fibres. Par exemple le textile non tissé peut être un penta-couches tri-axial comportant une couche 14A comportant des fibres circonférentielles 15 orientées dans une première direction, deux couches 14B comportant des fibres 16 orientées dans une deuxième direction, et deux couches 14C comportant des fibres 17 orientées dans une troisième direction.

Selon cet exemple, la couche 14A comportant les fibres circonférentielles 15 orientées dans une première direction est disposée entre les couches 14B et 14C comportant les fibres 16 et 17 orientées dans les autres directions, lesdites couches 14B et 14C étant alternées. Ainsi, on obtient l'empilement suivant :
- couche 14B comportant les fibres 16 orientées dans la deuxième direction,
- couche 14C comportant les fibres 17 orientées dans la troisième direction,
- couche 14A comportant les fibres circonférentielles 15 orientées dans la première direction,
- couche 14C comportant les fibres 17 orientées dans la troisième direction,
- couche 14B comportant les fibres 16 orientées dans la deuxième direction.

Cette séquence offre un empilement dit « miroir » équilibré dans le sens de l'épaisseur.

Le procédé présenté précédemment sur une forme à double courbure comportant une face convexe dite tonnoïde, s'applique également à des formes présentant des génératrices incurvées tel que des formes en diabolo, ou des formes à génératrices ondulées comportant alors des parties assimilables à des formes en tonnoïdes et des parties assimilables à des formes diabolo.

## Revendications

1. Procédé de fabrication d'une préforme (26) pour la fabrication d'une pièce (10) en matériau composite de type de forme finale non développable de révolution ou de quasi-révolution, présentant un axe longitudinal (A), **caractérisé en ce qu'**il comporte les étapes suivantes :
a) on fournit un textile (13) non tissé au moins tri-axial comprenant :
- une première couche (14A) comprenant des fibres dites circonférentielles (15) orientées dans une première direction,
- une deuxième couche (14B) comprenant des fibres (16), orientées dans une deuxième direction,
- une troisième couche (14C) comprenant des fibres (17), orientées dans une troisième direction, et
- des coutures (18) liant les fibres (15, 16, 17) des première, deuxième et troisième couches (14A, 14B, 14C), les coutures (18) s'étendant parallèlement entre elles et formant des fourreaux pour les fibres circonférentielles (15),
b) on dispose ledit textile (13) sur ou dans un élément de forme non développable (21, 27), soit identique à la forme finale non développable souhaitée, soit de dimensions réduites par rapport à la forme finale non développable souhaitée, en plaçant les coutures (18) parallèles à la direction circonférentielle (11, 28) de l'élément,
c) on fait glisser les fibres circonférentielles (15) dans les fourreaux formés par les coutures (18), de sorte que le textile (13) se trouve en contact continu avec l'élément de forme non développable (21, 27) et s'adapte ainsi à la forme non développable de l'élément de forme non développable (21, 27).

2. Procédé de fabrication selon la revendication précédente, dans lequel l'étape c) est réalisée en mettant en tension les fibres circonférentielles (15), de façon à faire glisser les fibres circonférentielles (15) dans les fourreaux formés par les coutures (18) et à décadrer les fibres (16, 17) des deuxième et troisième couches (14B, 14C).

3. Procédé de fabrication selon l'une quelconque des revendications précédentes, dans lequel on réalise une pression sur le textile (13) en direction de l'élément de forme non développable (21, 27), grâce à un moyen de pression (25) tel qu'un barreau.

4. Procédé de fabrication selon l'une quelconque des revendications précédentes, dans lequel lors de l'étape c) on met en tension les fibres (16, 17) des deuxième et troisième couches (14B, 14C).

5. Procédé de fabrication selon l'une quelconque des revendications précédentes, dans lequel l'élément de forme non développable (21, 27) est un élément de forme convexe, dit élément de forme mâle.

6. Procédé de fabrication selon l'une quelconque des revendications 1 à 4, dans lequel l'élément de forme non développable (21, 27) est un élément de forme concave, dit élément de forme femelle.

7. Procédé de fabrication selon l'une quelconque des revendications précédentes, dans lequel l'élément de forme non développable (21) présente une circonférence réduite par rapport à la pièce (10) de forme finale non développable souhaitée.

8. Procédé de fabrication selon l'une quelconque des revendications précédentes, dans lequel l'élément de forme non développable (27) présente une circonférence identique à la pièce (10) de forme finale non développable souhaitée.

9. Pièce (10) en matériau composite fabriquée grâce à une préforme (26) obtenue par le procédé selon l'une quelconque des revendications précédentes.

10. Nacelle comportant une pièce (10) selon la revendication précédente.

## Patentansprüche

1. Verfahren zur Herstellung eines Vorformlings (26) zur Herstellung eines Werkstücks (10) aus Verbundmaterial in der Art einer nicht abwickelbaren endgültigen Dreh- oder Quasidrehform, eine Längsachse (A) aufweisend, **dadurch gekennzeichnet, dass** es die folgenden Schritte beinhaltet:
a) Bereitstellen eines mindestens dreiachsigen Vliestextils (13), umfassend:
- eine erste Schicht (14A), die sogenannte umfangsmäße Fasern (15) umfasst, die in einer ersten Richtung ausgerichtet sind,
- eine zweite Schicht (14B), die Fasern (16) umfasst, die in einer zweiten Richtung ausgerichtet sind,
- eine zweite Schicht (14C), die Fasern (17) umfasst, die in einer dritten Richtung ausgerichtet sind, und
- Nähte (18), die die Fasern (15, 16, 17) der ersten, zweiten und dritten Schicht (14A, 14B, 14C) verbindet, wobei sich die Nähte (18) parallel zueinander erstrecken und Hüllen für die umfangsmäßen Fasern (15) bilden,
b) Anordnen des Textils (13) auf oder in einem Element mit einer nicht abwickelbaren Form (21, 27), entweder identisch zur gewünschten endgültigen nicht abwickelbaren Form, oder mit verringerten Abmessungen in Bezug auf die gewünschte endgültige nicht abwickelbare Form, durch Platzieren der Nähte (18) parallel zur umfangsgemäßen Richtung (11, 28) des Elements,
c) Gleiten lassen der umfangsmäßen Fasern (15) in den Hüllen, die durch die Nähte (18) gebildet werden, sodass sich das Textil (13) in kontinuierlichem Kontakt mit dem Element in nicht abwickelbarer Form (21, 27) befindet, und sich somit der nicht abwickelbarer Form des Elements in nicht abwickelbarer Form (21, 27) anpasst.

2. Verfahren zur Herstellung nach dem vorstehenden Anspruch, wobei der Schritt c) ausgeführt wird, indem die umfangsmäßen Fasern (15) derart in Spannung versetzt werden, um die umfangsmäßen Fasern (15) in die Hüllen, die durch die Nähte (18) gebildet werden, gleiten zu lassen, und die Fasern (16, 17) der zweiten und dritten Schicht (14B, 14C) aus dem Rahmen zu nehmen.

3. Verfahren zur Herstellung nach einem der vorstehenden Ansprüche, wobei dank eines Druckmittels (25), wie einer Stange, ein Druck an das Textil (13) in Richtung des Elements in nicht abwickelbarer Form (21, 27) angelegt wird.

4. Verfahren zur Herstellung nach einem der vorstehenden Ansprüche, wobei die Fasern (16, 17) der zweiten und dritten Schicht (14B, 14C) im Schritt c) in Spannung versetzt werden.

5. Verfahren zur Herstellung nach einem der vorstehenden Ansprüche, wobei das Element in nicht abwickelbarer Form (21, 27) ein Element in konvexer Form, einer sogenannten Außenform, ist.

6. Verfahren zur Herstellung nach einem der Ansprüche 1 bis 4, wobei das Element in nicht abwickelbarer Form (21, 27) ein Element in konkaver Form, einer sogenannten Innenform, ist.

7. Verfahren zur Herstellung nach einem der vorstehenden Ansprüche, wobei das Element in nicht abwickelbarer Form (21) einen in Bezug auf das Werkstück (10) in einer gewünschten endgültigen nicht abwickelbaren Form geringeren Umfang aufweist.

8. Verfahren zur Herstellung nach einem der vorstehenden Ansprüche, wobei das Element in nicht abwickelbarer Form (27) einen Umfang gleich dem Werkstück (10) in einer gewünschten endgültigen nicht abwickelbaren Form aufweist.

9. Werkstück (10) aus Verbundmaterial, das dank eines Vorformlings (26) hergestellt wird, der durch das Verfahren nach einem der vorstehenden Ansprüche erhalten wird.

10. Gondel, die ein Werkstück (10) nach dem vorstehenden Anspruch beinhaltet.

## Claims

1. A manufacturing method of a preform (26) for the manufacture of a part (10) made of a composite material of a revolution or quasi-revolution non-developable final shape type, having a longitudinal axis (A), **characterized in that** it includes the following steps:
a) providing an at least tri-axial non-woven fabric (13) comprising:
- a first layer (14A) comprising so-called circumferential fibers (15) oriented in a first direction,
- a second layer (14 B) comprising fibers (16), oriented in a second direction,
- a third layer (14C) comprising fibers (17), oriented in a third direction, and
- seams (18) binding the fibers (15, 16, 17) of the first, second and third layers (14A, 14B, 14C), the seams (18) extending parallel to each other and forming sheaths for the circumferential fibers (15),
b) disposing said fabric (13) on or in a non-developable shape element (21, 27), either identical to the desired non-developable final shape, or of reduced dimensions compared to the desired non-developable final shape, by placing the seams (18) parallel to the circumferential direction (11, 28) of the element,
c) sliding the circumferential fibers (15) in the sheaths formed by the seams (18), so that the fabric (13) is in continuous contact with the non-developable shape element (21, 27) and thus is adapted to the non-developable shape of the non-developable shape element (21, 27).

2. The manufacturing method according to the preceding claim, wherein step c) is carried out by tensioning the circumferential fibers (15), so as to slide the circumferential fibers (15) in the sheaths formed by the seams (18) and unraveling the fibers (16, 17) of the second and third layers (14B, 14C).

3. The manufacturing method according to any one of the preceding claims, wherein a pressure is produced on the fabric (13) in the direction of the non-developable shape element (21, 27), by means of a pressure means (25) such as a bar.

4. The manufacturing method according to any one of the preceding claims, wherein during step c) the fibers (16, 17) of the second and third layers (14B, 14C) are put in tension.

5. The manufacturing method according to any one of the preceding claims, wherein the non-developable shape element (21, 27) is a convex shape element, called male shape element.

6. The manufacturing method according to any one of claims 1 to 4, wherein the non-developable shape element (21, 27) is a concave shape element, called female shape element.

7. The manufacturing method according to any one of the preceding claims, wherein the non-developable shape element (21) has a reduced circumference with respect to the part (10) of the desired non-developable final shape.

8. The manufacturing method according to any one of the preceding claims, wherein the non-developable shape element (27) has a circumference identical to the part (10) of the desired non-developable final shape.

9. A part (10) made of a composite material manufactured using a preform (26) obtained by the method according to any one of the preceding claims.

10. A nacelle comprising a part (10) according to the preceding claim.
